# FASCICULE DE BREVET EUROPEEN

(11) **EP 0 629 811 B1**
(45) Date de publication et mention de la délivrance du brevet: **10.07.1996**
(21) Numéro de dépôt: 94401236.8
(22) Date de dépôt: 03.06.1994
(51) Int. Cl.: F17C 9/00, F17C 13/00

(54) **Dispositif de transfert d'hélium liquide entre deux appareils à des potentiels différents**
Übergabevorrichtung für flüssiges Helium zwischen zwei Geräten unterschiedlichen Potentials
Device for the transfer of liquid helium between two apparatuses of different potentials

(30) Priorité: 08.06.1993 FR 9306841
(43) Date de publication de la demande: 21.12.1994
(73) Titulaire: GEC ALSTHOM ELECTROMECANIQUE SA, 75016 Paris (FR)
(72) Inventeur: Cottevieille, Christian, F-93100 Montreuil sous Bois (FR)
(74) Mandataire: Fournier, Michel

(56) Documents cités:
- US-A- 4 745 760
- CRYOGENICS, Décembre 1981 pages 735 - 739 F. SCHAUER 'Transport of cryogenic liquids or gases between installations at different electrical potentials'

## Description

La présente invention concerne les liaisons destinées à l'alimentation en hélium liquide d'une installation cryogénique connectée à une haute tension à partir d'un réservoir ou d'un liquéfacteur connecté à la terre et porte, plus particulièrement, sur un dispositif de transfert d'hélium liquide entre deux appareils à des potentiels différents.

Les dispositifs de transfert d'hélium liquide de l'état de la technique comprennent des liaisons métalliques constituées de deux tubes coaxiaux, le tube intérieur transportant l'hélium liquide et le tube extérieur permettant d'assurer, par le vide, l'isolation thermique de la canalisation interne transportant l'hélium liquide.

Les tubes internes et externes sont reliés à des embouts par des soudures étanches au vide.

Les dispositifs de transfert d'hélium liquide de l'état de la technique ne permettent pas d'alimenter en hélium liquide des installations cryogéniques connectées à la haute tension à partir d'un réservoir ou d'un liquéfacteur connecté à la terre.

Un but du dispositif de transfert d'hélium liquide entre deux appareils à des potentiels différents de l'invention est de pallier à cet inconvénient.

Un autre but du dispositif de transfert d'hélium liquide entre deux appareils à des potentiels différents de l'invention est d'assurer l'isolation électrique, lors de l'alimentation en hélium liquide, entre l'installation cryogénique connectée à la haute tension et le réservoir d'hélium liquide ou le liquéfacteur connecté à la terre.

L'invention a pour objet un dispositif de transfert d'hélium liquide entre deux appareils à des potentiels différents comprenant:
- un premier et un second embout;
- un premier et un second tube métallique d'embout;
- un premier et un second tube métallique interne de transport de l'hélium liquide;
- des moyens de liaison isolants internes;
- des moyens de liaison isolants externes sur le pourtour desquels sont disposées des ailettes; et
- un conduit de pompage.

Conformément à une autre caractéristique de l'invention, le dispositif de transfert d'hélium liquide entre deux appareils à des potentiels différents est tel que:
- les extrémités du premier tube métallique interne de transport de l'hélium liquide pénètrent, respectivement, à l'intérieur du premier tube métallique d'embout et à l'intérieur de l'une des extrémités des moyens de liaison isolants internes;
- les extrémités du second tube métallique interne de transport de l'hélium liquide pénètrent, respectivement, à l'intérieur du second tube métallique d'embout et à l'intérieur de l'autre extrémité des moyens de liaison isolants internes;
- les moyens de liaison isolants externes sur le pourtour desquels sont disposées des ailettes enserrent, dans ses extrémités, respectivement, le premier et le second tube métallique d'embout;
- les premier et second embouts sont solidaires, respectivement, du premier et du second tube métallique d'embout; et
- le conduit de pompage est disposé sur l'un des tubes métalliques d'embout.

Un avantage du dispositif de transfert d'hélium liquide de l'invention est de pouvoir s'adapter sans difficulté sur les réservoirs ou les liquéfacteurs de l'art antérieur.

Un autre avantage du dispositif de transfert d'hélium liquide de l'invention est d'être démontable, selon des méthodes usuelles, lorsque le transfert de l'hélium liquide n'est pas nécessaire ou en cas de détérioration, sans nécessiter de grosses interventions sur l'installation. A titre d'exemple, les dispositifs de transfert d'hélium liquide décrits par F. SCHAUER dans la revue CRYOGENICS de décembre 1981, pages 735 à 739, et par J. GERHOLD dans la revue CRYOGENICS de février 1984, pages 73 à 82 ne présente pas un tel avantage.

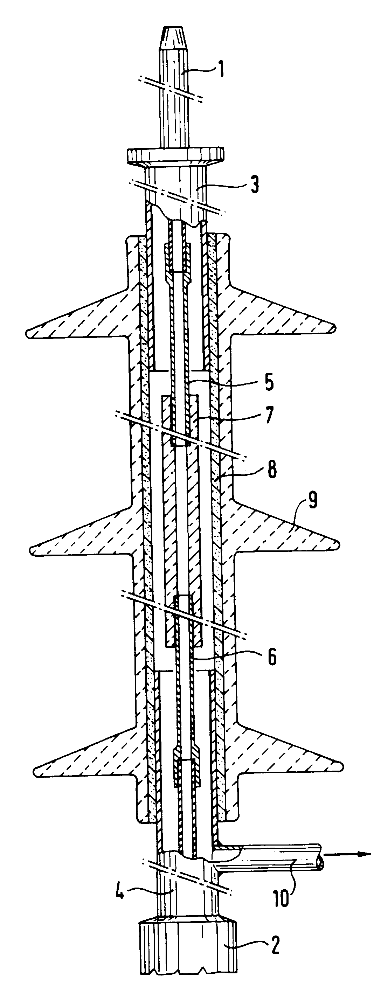

D'autres buts, caractéristiques et avantages du dispositif de transfert d'hélium liquide de l'invention apparaîtrons plus clairement à la lecture de la description du mode de réalisation préféré représenté dans le dessin joint dans lequel:
- la figure unique est une vue longitudinale du dispositif de l'invention.

Conformément au mode de réalisation préféré représenté à la figure unique, le dispositif de transfert d'hélium liquide entre deux appareils à des potentiels différents comprend un premier 1 et un second 2 embout, un premier 3 et un second 4 tube métallique d'embout, un premier 5 et un second 6 tube métallique interne de transport de l'hélium liquide, des moyens de liaison isolants internes 7, des moyens de liaison isolants externes 8 sur le pourtour desquels sont disposées des ailettes 9 et un conduit de pompage 10.

Les premier 1 et second 2 embouts sont solidaires, respectivement, du premier 3 et du second 4 tube métallique d'embout.

Les premier 3 et second 4 tubes métalliques d'embout assurent l'isolation thermique des premier 5 et second 6 tubes métalliques internes de transport de l'hélium liquide.

Les extrémités du premier tube métallique interne 5 de transport de l'hélium liquide pénètrent, respectivement, à l'intérieur du premier tube métallique d'embout 3 et à l'intérieur de l'une des extrémités des moyens de liaison isolants internes 7.

Les extrémités du second tube métallique interne 6 de transport de l'hélium liquide pénètrent, respectivement, à l'intérieur du second tube métallique d'embout 4 et à l'intérieur de l'autre extrémité des moyens de liaison isolants internes 7.

Les moyens de liaison isolants externes 8, sur le pourtour desquels sont disposées des ailettes 9, enserrent, dans ses extrémités, respectivement, le premier 3 et le second 4 tube métallique d'embout.

Le conduit de pompage 10 est disposé sur l'un des tubes métalliques d'embout 3,4.

Conformément au mode de réalisation préféré représenté, les premier 1 et second embouts 2 sont solidaires des premier 3 ou second 4 tubes métalliques d'embouts par des soudures étanches au vide.

Les premier 1 et second embouts 2 sont de préférence de type mâle et femelle. Le premier embout 1 est, par exemple, introduit dans un réservoir ou un liquéfacteur (non représenté) connecté à la masse. Le second embout 2 est alors couplé, par exemple, à un cryostat (non représenté) connecté à la haute tension.

Les premier 3 et second 4 tubes métallique d'embout sont reliés entre eux à l'aide des moyens de liaison isolants externes 8 de forme générale cylindrique.

Les premier 3 et second 4 tubes métallique d'embout sont, par exemple, des tubes en acier inoxydable de type 304L et de diamètre intérieur 23 mm et de diamètre extérieur 35 mm.

Les premier 5 et second 6 tubes métalliques interne de transport de l'hélium liquide sont, par exemple, des tubes en acier inoxydable du type 304L et de diamètre 6x8.

Les moyens de liaison isolants internes 7 sont, par exemple, en alumine et de forme générale tubulaire.

A titre d'exemple, la longueur des moyens de liaison isolants internes 7 est de l'ordre de 400 mm.

Les seconds moyens de liaison isolants externes 8 sont réalisés par enroulement filamentaire d'un matériau verre-résine.

Les ailettes 9 disposées sur le pourtour des moyens de liaison isolants externes 8 sont en un matériau du type élastomère connu.

Les moyens de liaison isolants externes 8 et les ailettes 9 disposées sur le pourtour desdits moyens 8 constituent donc un isolateur composite 8,9.

A titre d'exemple, la longueur dudit isolateur composite 8,9 est de l'ordre de 620 mm pour un niveau de tension de 63 kV. Cette longueur est fonction du niveau de tension à supporter.

Les ailettes 9 disposées sur le pourtour des moyens de liaison isolants externes 8 sont, par exemple, en élastomère. Le but de ces ailettes 9 est d'augmenter la ligne de fuite.

A titre d'exemple, l'écart longitudinal entre deux ailettes 9 successives est de l'ordre de 130 mm.

L'embout de pompage 10 est situé à une distance suffisante de l'extrémité de l'isolateur composite 8,9 de telle manière qu'il se trouve dans une zone où le champ électrique est trés faible.

Une vanne d'isolation et des moyens de pompage (non représentés) sont disposés en bout du conduit de pompage.

Conformément à un mode de réalisation particulier, les moyens de liaison isolants internes 7 isolant électriquement les premier 5 et second 6 tubes internes de transport de l'hélium liquide sont réalisés par une liaison céramique métal et sont de forme tubulaire. Cette liaison céramique peut être en alumine ou en tout autre matériau analogue.

L'isolateur composite 8,9 isolant électriquement les premier 3 et second 4 tubes métalliques d'embout est constitué d'un tube en verre époxy réalisé par enroulement filamentaire. Les ailettes 9 sont en élastomère et sont disposées sur le pourtour des moyens isolants externes 8, par exemple par injection.

L'étanchéité au vide de ces liaisons est assurée selon des techniques connues.

Conformément à un autre mode de réalisation particulier, les moyens isolants externes 8 sont réalisés par liaison céramique métal.

Enfin, suivant le niveau de tension, il sera avantageux d'utiliser des armatures de protection (non représentées) destinées à éloigner l'arc de l'isolateur composite 8,9 en cas de contournement. A titre d'exemple, pour un niveau de tension de 63 kV, ces armatures seront limitées à l'extrémité haute tension du dispositif de transfert d'hélium liquide.

## Revendications

1. Dispositif de transfert d'hélium liquide entre deux appareils à des potentiels différents comprenant:
- un premier (1) et un second (2) embout;
- un premier (3) et un second (4) tube métallique d'embout;
- un premier (5) et un second (6) tube métallique interne de transport de l'hélium liquide;
- des moyens de liaison isolants internes (7);
- des moyens de liaison isolants externes (8) sur le pourtour desquels sont disposées des ailettes (9); et
- un conduit de pompage (10).

2. Dispositif de transfert d'hélium liquide entre deux appareils à des potentiels différents selon la revendication 1, dans lequel:
- les extrémités du premier tube métallique interne (5) de transport de l'hélium liquide pénètrent, respectivement, à l'intérieur du premier tube métallique d'embout (3) et à l'intérieur de l'une des extrémités des moyens de liaison isolants internes (7);
- les extrémités du second tube métallique interne (6) de transport de l'hélium liquide pénètrent, respectivement, à l'intérieur du second (4) tube métallique d'embout et à l'intérieur de l'autre extrémité des moyens de liaison isolants internes (7);
- les seconds moyens de liaison isolants externes (8), sur le pourtour desquels sont disposées des ailettes (9), enserrent, dans ses extrémités, respectivement, le premier (3) et le second (4) tube métallique d'embout;
- les premier (1) et second (2) embouts sont solidaires, respectivement, du premier (3) et du second (4) tube métallique d'embout; et
- le conduit de pompage (10) est disposé sur l'un des tubes métalliques d'embout (3, 4).

## Patentansprüche

1. Vorrichtung zum Transfer von flüssigem Helium zwischen zwei auf unterschiedlichem Potential liegenden Geräten,
- mit einem ersten und einem zweiten Endstück (1, 2),
- mit einem ersten und einem zweiten End-Metallrohr (3, 4),
- mit einem ersten und einem zweiten inneren Metallrohr (5, 6) zum Transport von flüssigem Helium,
- mit inneren isolierenden Verbindungsmitteln (7),
- mit äußeren isolierenden Verbindungsmitteln (8), auf deren Umfang Rippen (9) angebracht sind,
- und mit einer Pumpleitung (10).

2. Vorrichtung zum Transfer von flüssigem Helium zwischen zwei auf unterschiedlichem Potential liegenden Geräten nach Anspruch 1,
- wobei die Enden des ersten inneren Metallrohrs (5) zum Transport von flüssigem Helium ins Innere des ersten End-Metallrohrs (3) bzw. ins Innere eines der Enden der inneren isolierenden Verbindungsmittel (7) eindringen,
- wobei die Enden des zweiten inneren Metallrohrs (6) zum Transport von flüssigem Helium ins Innere des zweiten End-Metallrohrs (4) und ins Innere des anderen Endes der inneren isolierenden Verbindungsmittel (7) eindringen,
- wobei die zweiten äußeren isolierenden Verbindungsmittel (8), auf deren Umfang sich die Rippen (9) befinden, mit ihren beiden Enden die beiden End-Metallrohre (3, 4) umspannen,
- wobei die beiden Endstücke (1 und 2) mit dem ersten (3) bzw. dem zweiten End-Metallrohr (4) fest verbunden sind,
- und wobei die Pumpleitung (10) an einem der End-Metallrohre (3, 4) angebracht ist.

## Claims

1. Apparatus for transferring liquid helium between two devices at different potentials, the apparatus comprising:
· first and second endpieces (1, 2);
· first and second metal endpiece tubes (3, 4);
· first and second internal metal tubes (5, 6) for conveying liquid helium;
· internal insulating connection means (7);
· external insulating connection means (8) having fins (9) disposed around the periphery thereof; and
· a pumping passage (10).

2. Apparatus according to claim 1, for transferring liquid helium between two devices at different potentials, in which:
· respective ends of the first internal metal tube (5) for conveying liquid helium penetrate inside the first metal endpiece tube (3) and inside one end of the internal insulating connection means (7);
· respective the ends of the second internal metal tube (6) for conveying liquid helium penetrate inside the second metal endpiece tube (4) and inside the other end of the internal insulating connection means (7);
· respective ends of the external insulating connection means (8), having fins (9) disposed around the periphery thereof, enclose the first and the second metal endpiece tubes (3, 4);
· the first and second endpieces (1, 2) are secured to the first and second metal endpiece tubes (3, 4) respectively; and
· the pumping passage (10) is disposed on one of the metal endpiece tubes (3, 4).
